# EUROPEAN PATENT APPLICATION

(11) **EP 1 053 708 A1**
(43) Date of publication of application: **22.11.2000**
(21) Application number: 00304096.1
(22) Date of filing: 15.05.2000
(51) Int. Cl.: A47G 19/22

(54) **A beverage receptacle**

(30) Priority: 18.05.1999 GB 9911353
(71) Applicant: Clarke, Robert David, Stockport, Cheshire SK3 8UE (GB)
(72) Inventor: Clarke, Robert David, Stockport, Cheshire SK3 8UE (GB)
(74) Representative: Jones, Keith William

(57) **Abstract**

A beverage receptacle 14 having a bowl part 1 for holding a beverage and a hollow stem part 2 supporting the bowl part 1. Within the bowl part 1 is a hollow capsule 15 which is joined to the stem part 2 such that the hollow in the capsule 15 and the hollow in the stem part are in communication and the hollow in the capsule provides a recess for receiving at least one electrical component. The component could be lighting means 10, for visually enhancing the beverage in the receptacle 14, and/or heating means 11, for raising the temperature of the beverage to the ideal for consumption.

## Description

The invention relates to a beverage receptacle.

Beverages served, for example, at parties or on festive occasions are often visually enhanced, decorated or adorned with paper parasols, sparklers, coloured cocktail sticks etc. However, enhancements of this type, especially those intended to be put into the receptacle, may compromise the quality of some beverages. For instance, a wooden parasol stalk may influence the flavour of wine.

Particular beverages, red wine and certain spirits for example, should ideally be consumed at slightly raised temperatures. However, in latitudes such as those occupied by the UK, the climate dictates that these beverages are often consumed at below ideal temperatures and, as a consequence, may not be enjoyed at their best. Other beverages are best enjoyed chilled, and keeping them chilled in the receptacle may be problematic, particularly in warmer climates and/or if the addition of ice may have a detrimental affect on the beverage

US-A-5070435 discloses a beverage receptacle having a bowl part for holding a beverage and a stem part supporting the bowl part. However, the bowl part, as is common, sits atop the stem part, with the stem part extending to the bowl part and no section thereof extending into the bowl part. The stem part is hollow and located within it is light means for producing decorative effects, but the light means is to the side of, and separated by the wall of the bowl part from, the beverage. US-A-5070435 is silent as regards raising the temperature of the beverage.

The invention provides a beverage receptacle having a bowl part for holding a beverage, a hollow stem part supporting the bowl part and a hollow capsule within the bowl part, wherein the capsule adjoins the stem part whereby the hollow in the capsule and the hollow in the stem part are in communication and wherein the hollow in the capsule provides a recess for receiving at least one electrical component. Hence, the electrical component will be submerged when the receptacle is filled.

The stem part may extend into or to the bowl part. Alternatively, the stem part may extend to a position short of the bowl part, in which case the capsule may be partially outside the bowl part with the bowl part supported by the stem part through the capsule. The capsule may be formed separately from the stem part and joined to the stem part during production of the receptacle. Alternatively, the capsule may be formed integrally with the stem part, for instance from a closed end tube whose closed end is modified, or may simply be the end section of the stem part. The capsule may be of bulbous or any other suitable form.

According to a first aspect of the invention, the electrical component comprises lighting means. Such means provide a visual enhancement of a beverage held in the bowl part but, because the means is received within the capsule, without compromising the quality of the beverage. An attractive effect may be achieved, especially with translucent beverages, as a result of light shining from a submerged position out through the beverage. The lighting means may comprise one or more filament, fluorescent or similar lamps, bulbs or tubes or may comprise one or more semiconductor devices, such as light emitting diodes, all of which are commonly available in various colours.

According to a second aspect of the invention, the electrical component comprises heating means. Such means raises the temperature of the beverage to the ideal for consumption, and heating efficiency is maximised by having the heating means submerged. Heating efficiency may be further maximised by having a capsule form, such as the aforementioned bulbous form, which maximises heat transfer. The heating means may comprise a resistive heating coil or anything similar capable of producing heat on passing an electrical current, such as a filament lamp. A thermostatic control, for controlling power supplied to the heating means, so as not to overheat the beverage or too rapidly exhaust the power source, may also be located within the capsule.

The at least one electrical component could equally well comprise cooling means for reducing the temperature of a beverage held in the bowl part. Indeed, the receptacle according to the invention may be adapted for use in keeping beverages chilled by removing all components from the capsule and the hollow in the stem part, and using them instead as a crushed-ice receiving chamber. The crushed ice could be retained with a suitable plug.

According to a third aspect of the invention the electrical component comprises both lighting means and heating means or means which serves both a lighting and heating function. Thus, in its third aspect, the invention both visually enhances a beverage in the receptacle and has the facility to raise its temperature. Equally, the electrical component may comprise lighting means and cooling means

A power source and a switch may be located within the hollow stem part. These and the other electrical components may be fitted into a tube which is slidably received within the stem part and extends into the capsule. The tube may be transparent, translucent and/or coloured, and may be of plastics materials. The tube and the stem part may have interengaging means for retaining the tube within the stem part. For instance, circumferential projections may be provided on the outer surface of the tube which interengage with circumferential recesses on the inner surface of the stem part. A releasable plug for retaining the tube in the stem part may be provided as well as or instead of the interengaging means.

A decorative sleeve may be located also within the stem part. This may not only enhance the stem part but also hide the electrical components therein. The decoration on the sleeve may include reflective, fluorescent, luminous or similar elements. A further lighting means also located in the stem part, behind the sleeve, may add to its decorative effect.

A base part may be provided at the lower end of the stem, for stabilising the receptacle.

The invention will now be described, by way of example, with reference to the following drawings, in which:
Figure 1 is a cross sectional side view of a beverage receptacle according to the invention, with electrical components (shown schematically) and decorative sleeve located in the stem part of the receptacle;
Figure 2 is a cross sectional side view of a beverage receptacle according to the invention, with the electrical components (shown schematically) and decorative sleeve exploded for ease of understanding; and
Figure 3 shows three partial cross sectional views of alternative arrangements of a bowl part, stem part and capsule for a beverage receptacle according to the invention.

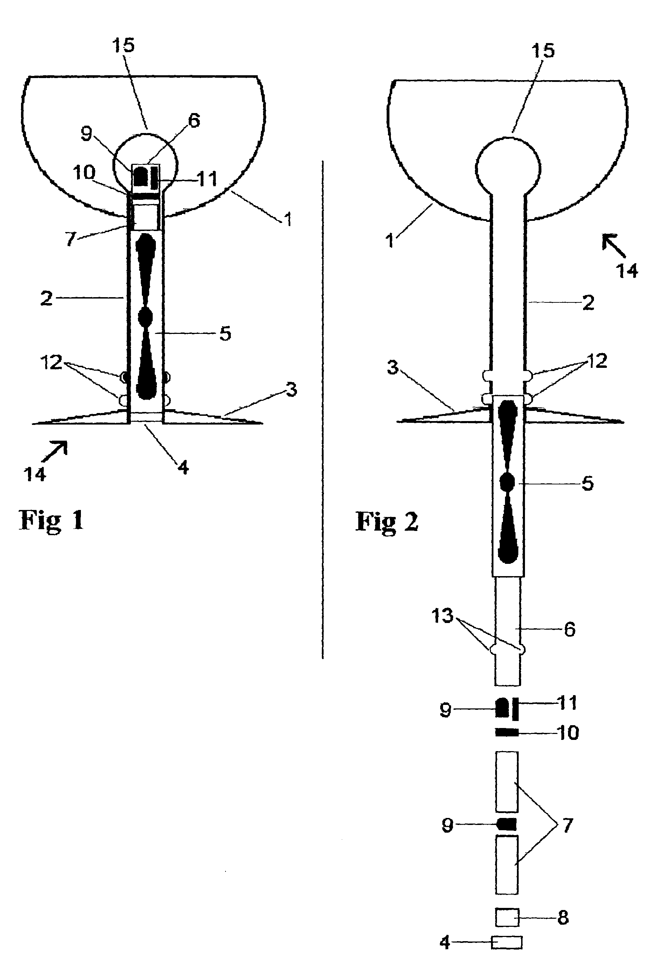

With reference to figures 1 and 2, a beverage receptacle indicated generally at 14 has a glass bowl part 1 for holding a beverage and a glass stem part 2 supporting the bowl part 1. The upper end of the stem part 2 extends into the bowl part and, at its lower end, a glass base part 3 is attached or integrally formed. The stem part 2 is hollow. Within the bowl part 1 is a glass capsule 15 which is also hollow. The capsule 15 is joined to the stem part 2 such that the hollow in the stem part 2 and the hollow in the capsule 15 are in communication. Thus, an upper section of the hollow stem part 2 and, in particular, the capsule 15 is submerged when the receptacle 14 is filled with beverage (not shown).

Received within the recess provided by the capsule 15 is a light emitting diode (LED) 9, a heating filament 11 and a thermostatic control 10. Power is supplied to the LED 9 and the filament 11 via the control 10 from two batteries 7, also located in the stem part 2, below the LED 9, filament 11 and control 10. Additionally located in the stem part 2, below the batteries 7, is an on/off switch 8. The electrical components, that is, the LED 9, filament 11, control 10, batteries 7 and switch 8, are all fitted, in that order, into a transparent plastics material tube 6 which is slidably received within the stem part 2 and, because of the communication between the hollow in the stem part 2 and the hollow in the capsule 15, the LED 9, the filament 11 and the control 10 in the upper section of the tube 6 are inserted through the stem part 2 into the capsule 15. The tube 6 is provided on the outer surface of its lower section with circumferential projections 13 which interengage with circumferential recesses 12 on the lower inner surface of the stem part, thereby to retain the tube 6 within the stem part 2. The tube 6 is also, or alternatively, retained in the stem part 2 by a releasable plug 4.

Removal of the plug 4 and withdrawal of the tube 6 permits ease of access to replace any of the electrical components including the batteries 7. Also, by removing the plug 4 and withdrawing the tube 6 and/or the components therein, the receptacle 14 may be washed at high temperature and/or pressure without the risk of damage to the components.

Also within the stem part 2, around the tube 6, is a decorative sleeve 5 which is constituted by an open-ended cylinder of partially translucent plastics material: the translucent part is in a decorative pattern. This is provided on its outer surface with decorative elements, and a further electrical component, an LED 19, also located in the stem part 2, behind the sleeve 5, offers further decorative effects.

In use of the receptacle 14, the plug 4 is removed from the stem part 2 and the tube 6 is slid out. The switch 8 is actuated so as to turn on the LED 9, 19 and the filament 11. The tube 6 is returned into the stem part 2 and the plug 4 is replaced. The bowl part 1 is then filled with the desired beverage (not shown). The LED 9 in the recess provided by the capsule 15 visually enhances the beverage by shining therethrough. Similarly, the LED 19 enhances the stem part 2 and shines through the sleeve 5. The filament 11 heats the beverage to its ideal temperature for consumption at which point the thermostatic control 10 turns off the filament 11.

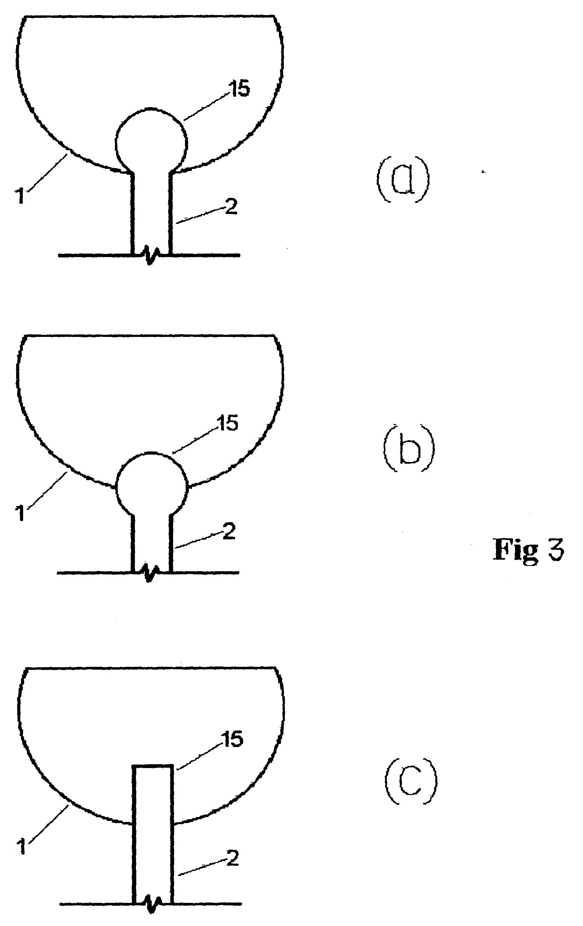

With reference to figure 3, the capsule 15 could, alternatively, be (a) joined to a stem part 2 which extends only to, and not into, the bowl part 1, (b) joined to a stem part 2 which stops short of the bowl part 1 such that the bowl part 1 is supported by the stem part 2 through the capsule 15 which is partially out of the bowl part 1, or (c) an upper section of the stem part 2 with a closed open end.

## Claims

1. A beverage receptacle (14) having a bowl part (1) for holding a beverage and a hollow stem part (2) supporting the bowl part (1) characterised by a hollow capsule (15) within the bowl part (1), wherein the capsule (15) adjoins the stem part (2) whereby the hollow in the capsule (15) and the hollow in the stem part (2) are in communication and wherein the hollow in the capsule (15) provides a recess for receiving at least one electrical component.

2. A beverage receptacle (14) according to claim 1 wherein the stem part (2) extends into or to the bowl part (1), or the stem part (2) extends to a position short of the bowl part (1).

3. A beverage receptacle (14) according to claim 1 or claim 2 wherein the capsule (15) is formed separately from the stem part (2) and joined to the stem part (2) during production of the receptacle (14) or formed integrally with the stem part (2).

4. A beverage receptacle (14) according to claim 1 or claim 2 wherein the capsule (15) is an end portion of the stem part (2).

5. A beverage receptacle (14) according to claim 3 wherein the capsule (15) is of bulbous form.

6. A beverage receptacle (14) according to any preceding claim wherein the at least one electrical component comprises lighting means (9).

7. A beverage receptacle (14) according to claim 6 wherein the lighting means (9) comprises at least one filament or fluorescent lamp, bulb or tube or at least one semiconductor device or light emitting diode, or a combination thereof.

8. A beverage receptacle (14) according to any preceding claim wherein the at least one electrical component comprises heating means (11).

9. A beverage receptacle (14) according to claim 8 wherein the heating means (11) comprises a resistive heating coil.

10. A beverage receptacle (14) according to claim 9 wherein the at least one electrical component further comprises a thermostatic control (10).

11. A beverage receptacle according to any of claims 1 to 7 wherein the at least one electrical component comprises cooling means.

12. A beverage receptacle (14) according to any preceding claim wherein a power source (7) and a switch (8) are located within the hollow stem part (2).

13. A beverage receptacle (14) according to any preceding claim wherein at least one electrical component is fitted into a tube (6) which is slidably received within the stem part (2).

14. A beverage receptacle (14) according to claim 13 wherein the tube (6) and the stem part (2) have interengaging means for retaining the tube (6) within the stem part (2).

15. A beverage receptacle (14) according to claim 14 wherein the interengaging means comprises circumferential projections (13) on the outer surface of the tube (6) and circumferential recesses (12) on the inner surface of the stem part (12).

16. A beverage receptacle (14) according to any of claims 13, 14 or 15 wherein a releasable plug (4) for retaining the tube (6) in the stem part is provided.

17. A beverage receptacle according to any preceding claim wherein a decorative sleeve (5) is located within the stem part (2).

18. A beverage receptacle (14) according to claim 16 wherein further lighting means is located in the stem part (2), behind the sleeve (5).
